# EUROPÄISCHE PATENTANMELDUNG

(11) **EP 4 498 310 A1**
(43) Veröffentlichungstag der Anmeldung: **29.01.2025**
(21) Anmeldenummer: 23187442.1
(22) Anmeldetag: 25.07.2023
(51) Int. Cl.: G06Q 30/018, G06Q 50/04, G01R 31/00

(54) **ZÄHLVORRICHTUNG ZUM ZÄHLEN EINER BENUTZUNG EINES ELEKTRONISCHEN BAUTEILS, ANORDNUNG SOWIE VERFAHREN ZUM ZÄHLEN EINER BENUTZUNG EINES ELEKTRONISCHEN BAUTEILS**

(71) Anmelder: Siemens Aktiengesellschaft, 80333 München (DE)
(72) Erfinder: Franke, Martin, 14089 Berlin (DE); Kriegel, Kai, 81739 München (DE); Maul, Christian, 90489 Nürnberg (DE); Müller, Bernd, 16259 Falkenberg (DE); Raab, Oliver, 94496 Ortenburg (DE)
(74) Vertreter: Siemens Patent Attorneys

(57) **Zusammenfassung**

Die Erfindung betrifft eine Zählvorrichtung (10) zum Zählen einer Benutzung eines elektronischen Bauteils (12), mit zumindest einer Speichereinrichtung (14), wobei eine passive Energieumsetzeinrichtung (16) vorgesehen ist, welche bei einer Benutzung des elektronischen Bauteils (12) Energie (18) am elektronischen Bauteil (12) in elektrische Energie (20) umsetzt, und auf Basis dieses Ereignisses (24) eine Benutzung detektiert und in der Speichereinrichtung (14) abspeichert. Ferner betrifft die Erfindung eine Anordnung (26) sowie ein Verfahren.

## Beschreibung

Die Erfindung betrifft eine Zählvorrichtung zum Zählen einer Benutzung eines elektronischen Bauteils mit zumindest einer Speichereinrichtung. Ferner betrifft die Erfindung eine Anordnung mit einer Zählvorrichtung, sowie ein Verfahren zum Zählen einer Benutzung eines elektronischen Bauteils.

Aufgrund der Nachhaltigkeitsanforderungen werden in Zukunft vermehrt zirkuläre Geschäftsmodelle umgesetzt werden. Ein Pfad dieser zirkulären Geschäftsmodelle beinhaltet das Wieder-Inverkehrbringen von bereits benutzten elektronischen Baugruppen und Komponenten. Im industriellen Umfeld spielen Stillstandszeiten von Produktionsumgebungen und auch Sicherheitsanforderungen eine große Rolle. Daher ist es von großer Bedeutung, den Zustand beziehungsweise den Grad der Abnutzung/Benutzung/Alterung von elektronischen Komponenten und elektronischen Baugruppen und Komponenten möglichst genau zu kennen, bevor sie wiedereingesetzt beziehungsweise verkauft werden. Darüber hinaus kann das Tracking der Historie ebenso als Echtheitsmerkmal verwendet werden, um gefälschte von echten Produkten zu unterscheiden. Der Hersteller hat genaue Kenntnisse der Prozesse in der Herstellung oder gegebenenfalls des Betriebs von Baugruppen, welche zum Beispiel im Hinblick auf die Temperatur entsprechend gespeichert werden. Diese können dann genutzt werden, um die Echtheit von Produkten zu prüfen und diese gegebenenfalls gegenüber gefälschten Produkten abgrenzen.

Eine Möglichkeit, die Art und Frequenz der Nutzung mitzuschreiben beziehungsweise mit abzuspeichern ist es, dies mit Hilfe von aktiven elektronischen Komponenten, insbesondere so genannten Fahrtenschreibern, zu erledigen. Dies bringt jedoch mehrere Nachteile mit sich. Erstens erzeugen diese Komponenten zusätzliche Kosten. Zweitens müssen diese Komponenten mit Versorgungsspannungen und Zusatzbeschaltungen ausgestattet werden. Dies erfordert jedoch einen Eingriff in bestehende Schaltungen. Drittens bringt dieser Eingriff in manchen Schaltungen zusätzliche Sicherheitsanforderungen mit sich oder ist sogar unmöglich, zum Beispiel bei Leistungselektronik und aufgrund von Hochspannung. Viertens ist die nachträgliche Integration in bereits existierende Schaltungen meistens nicht möglich.

Im Stand der Technik ist das Problem bisher damit gelöst, indem von aktiven elektronischen Komponenten die Betriebszustände mitgeschrieben und gespeichert werden, ähnlich einem elektronischen Fahrtenschreiber. Eine weitere Unzulänglichkeit derartiger Komponenten ist, dass zusätzlich ein Langzeitspeicher mit zur Verfügung gestellt werden muss. Wird dies nicht gewährleistet, vergisst der flüchtige IC-Speicher bei einem Ausfall der Versorgungsspannung die gespeicherten Werte. Ein zusätzliches Problem ist auch, dass durch die elektrische Verbindung der "Fahrtenschreiber" mit dem Zielstromkreis Störereignisse auf den elektrischen Leitungen, zum Beispiel Überspannungen, die Speicherbauteile beschädigen können und dadurch die gespeicherten Informationen verloren gehen.

Aufgabe der vorliegenden Erfindung ist es, eine Zählvorrichtung, eine Anordnung sowie ein Verfahren zu schaffen, mittels welchen verbessert eine Benutzung eines elektronischen Bauteils gezählt werden kann.

Diese Aufgabe wird durch eine Zählvorrichtung, eine Anordnung sowie durch ein Verfahren gemäß den unabhängigen Patentansprüchen gelöst. Vorteilhafte Ausgestaltungsformen sind in den Unteransprüchen angegeben.

Ein Aspekt der Erfindung betrifft eine Zählvorrichtung zum Zählen einer Benutzung eines elektronischen Bauteils, mit zumindest einer Speichereinrichtung.

Es ist dabei vorgesehen, dass eine passive Energieumsetzeinrichtung vorgesehen ist, welche bei einer Benutzung des elektronischen Bauteils Energie am elektronischen Bauteil in elektrische Energie umsetzt, und auf Basis dieses Ereignisses eine Benutzung detektiert und in der Speichereinrichtung abspeichert.

Somit kann passiv die Benutzung des elektronischen Bauteils erfasst werden und auf Basis dessen die Zählvorrichtung die Benutzung selbst zählen.

Insbesondere ist somit vorgesehen, dass die passive Energieumsetzeinrichtung bereitgestellt werden kann, welche ohne eine äußere Energieversorgung Nutzungsdaten abspeichern kann. Dazu wird die passive Energieumsetzeinrichtung zur Umwandlung von Umweltenergie in elektrische Energie, insbesondere durch ein genanntes Energy-Harvesting, verwendet. Diese Energie wird anschließend genutzt, um die Information, dass ein derartiges Ereignis aufgetreten ist, in der Speichereinrichtung, welche insbesondere als elektronischer Langzeitspeicher ausgebildet ist, abgelegt.

Ein wesentlicher Vorteil ist, dass das Messereignis gleichzeitig der Energielieferant für das Abspeichern der Daten ist.

Die passive Energieumsetzeinrichtung beziehungsweise die sensorische beziehungsweise das energieerzeugende Element kann dazu innerhalb des gleichen Gehäuses wie die Speichereinrichtung untergebracht sein oder als separates Bauteil vorliegen.

Insbesondere hat dies den Vorteil, dass ein Tracking der Nutzungsart und Dauer realisiert werden kann. Ferner kann auch ein Tracking der Historie, insbesondere als so genannter digitaler Fingerabdruck für die Fälschungssicherheit bereitgestellt werden. Es wird keine Wechselwirkung mit der bestehenden Schaltung realisiert. Ferner werden keine zusätzlichen Layoutkosten und Komplexität erzeugt. Insbesondere kann dadurch ein einfacher und kostengünstiger Aufbau realisiert werden. Des Weiteren kann die vorhandene Energie der Störpulse direkt dazu genutzt werden, um Informationen abzuspeichern. Ferner kann eine zusätzliche Sicherheitsebene in die Schaltung eingebracht werden. Insbesondere geht somit die Zählvorrichtung über ein reines so genanntes Cycle Counting hinaus, da eine deutlich genauere Bewertung und Verfolgung der Bauteilnutzung realisiert werden kann. Des Weiteren kann eine Qualitätsüberprüfung während des Produktionsprozesses, beispielsweise bei Lottemperaturen, realisiert werden. Beim Produktionsprozess kann ein originärer Fingerabdruck des elektronischen Bauteils abgespeichert werden. Ein nicht bestimmungsgemäßer Gebrauch des Endgeräts kann erkannt und im Garantiefall ebenfalls überprüft werden. Ferner kann auch die Transportkette überprüft werden, zum Beispiel ob Temperaturbereiche oder mechanische Schocks aufgetreten sind.

Gemäß einer vorteilhaften Ausgestaltungsform ist die Zählvorrichtung zum Ankleben oder zum Anlöten an einer Oberfläche des elektronischen Bauteils ausgebildet. Mit anderen Worten kann die Zählvorrichtung direkt auf das elektronische Bauteil aufgebracht werden. Dadurch ist es ermöglicht, dass die Energie direkt vom elektronischen Bauteil über die passive Energieumsetzeinrichtung aufgenommen werden kann. Insbesondere kann ferner vorgesehen sein, dass durch eine präzise Einstellung der geometrischen Abstände zwischen der passiven Energieumsetzeinrichtung beziehungsweise durch eine entsprechende Kalibrierung die Qualität gewährleistet werden kann, so dass entsprechende Energiehübe dem Schädigungsereignis, welches aufgezeichnet werden soll, auch zugeordnet werden kann. Somit kann äußerst präzise und einfache Art und Weise die Benutzung des elektronischen Bauteils erfasst werden.

Eine weitere vorteilhafte Ausgestaltungsform sieht vor, dass die Zählvorrichtung eine Ausleseeinrichtung zum Auslesen von zumindest einem Zählerstand in der Speichereinrichtung aufweist. Insbesondere kann sich auf der Oberfläche der Zählvorrichtung die entsprechende Ausleseeinrichtung befinden, mit deren Hilfe der Zustand des Speichers zu einem beliebigen späteren Zeitpunkt ausgelesen werden kann. Somit kann zuverlässig die Benutzung des elektronischen Bauteils ausgelesen werden und beispielsweise eine Überwachung des Bauteils realisiert werden.

Weiterhin vorteilhaft ist, wenn die Ausleseeinrichtung in Form von zumindest einem Prüfpad ausgebildet ist. Insbesondere ist die Ausleseeinrichtung in Form von zumindest zwei Prüfpads ausgebildet. Insbesondere befinden sich die Prüfpads beispielsweise auf einer Oberfläche der Zählvorrichtung. Somit kann realisiert werden, dass auf einfache Art und Weise das Auslesen des Speichers realisiert werden kann.

Ferner hat es sich als vorteilhaft erwiesen, wenn die Ausleseeinrichtung in Form von einem RFID-Chip ausgebildet ist. Insbesondere kann somit der Auslesevorgang auch über das Gehäuse über entsprechende Antennenstrukturen, beispielsweise mit der RFID-Technologie durchgeführt werden. Der Chip ist dann von außen nicht elektrisch zugänglich, das heißt, mechanisch, chemisch und im Hinblick auf die Sicherheit besser geschützt. Außerdem ist das Package einfacher und daher kostengünstiger herzustellen.

Weiterhin vorteilhaft ist, wenn die Zählvorrichtung einen Temperaturfühler aufweist, wobei mittels des Temperaturfühlers thermische Energie erfasst wird. Insbesondere kann die thermische Energie auch über den Temperaturfühler an die Energieumsetzeinrichtung übertragen werden, so dass die Energieumsetzeinrichtung die thermische Energie in elektrische Energie umwandeln kann. Somit ist es nicht notwendig, dass beispielsweise die passive Energieumsetzeinrichtung direkt an dem elektronischen Bauteil angeordnet wird. Die passive Energieumsetzeinrichtung kann somit beabstandet zum elektronischen Bauteil ausgebildet sein. Somit kann auf unterschiedliche Strukturen des elektronischen Bauteils verbessert eingegangen werden.

Es hat sich weiterhin als vorteilhaft erwiesen, wenn die Zählvorrichtung, das elektronische Bauteil und der Temperaturfühler in einer organischen Matrix angeordnet sind. Alternativ oder ergänzend kann können auch andere flexible Materialien beziehungsweise teilweise flexiblen Materialien genutzt werden. Diese organischen Materialien können auch Teilbereiche mit festen Strukturen vorweisen. Die festen Strukturen können in diesem Fall Halbleiterbausteine oder Leiterbahnen aufweisen. Es ist auch möglich, die Schaltung insgesamt oder Teilbereiche davon als gedruckte Elektronik auszuführen. Diese flexiblen Label haben den Vorteil, dass es auch auf zum Beispiel Kabeln, BUS-Bars, Gehäuse oder passive Schaltungselemente, wie Kondensatoren und Drosseln, aufgebracht werden kann.

Ferner hat es sich als vorteilhaft erwiesen, wenn die Zählvorrichtung dazu ausgebildet ist, bei einem Überschreiten eines vorgegebenen Schwellwerts für die Energie am Bauteil ein Ereignis zu detektieren. Insbesondere kann der Schwellwert beispielsweise durch die entsprechenden thermischen Schädigungsvorgänge, welche bei dem elektronischen Bauteil auftreten könnten, vorgegeben werden. Somit ist insbesondere der Schwellwert durch die entsprechenden potentiellen Schädigungsvorgänge als Messgröße vorgegeben und dient zum Tracking beziehungsweise Zählen der Anzahl an Temperaturwechselvorgängen. Somit kann zuverlässig ein Zählen der Benutzung realisiert werden.

Gemäß einer weiteren vorteilhaften Ausgestaltungsform ist die Zählvorrichtung zusätzlich dazu ausgebildet, eine Dauer des Ereignisses zu detektieren und abzuspeichern. Insbesondere wird somit die Ereignishöhe und die Ereignisdauer gemessen und zusätzlich mitabgespeichert. Somit kann neben dem reinen Ereignis auch die Dauer mitberücksichtigt werden, wodurch verbessert auf eine Schädigung des elektronischen Bauteils geschlossen werden kann.

Ebenfalls vorteilhaft ist, wenn die Speichereinrichtung als Flash-Speicher ausgebildet ist. Bei dem Flash-Speicher handelt es sich insbesondere um einen Langzeitspeicher. Insbesondere kann somit ein spezieller elektronischer Langzeitspeicher ausgebildet werden, welcher zuverlässig die Ereignisse abspeichern kann und somit auch auf lange Sicht ein Zählen der Benutzung ermöglicht.

Es hat sich weiterhin als vorteilhaft erwiesen, wenn die passive Energieerzeugungseinrichtung zum Umwandeln von thermischer Energie und/oder mechanischer Energie und/oder magnetischer Energie in elektrische Energie ausgebildet ist. Beispielsweise kann zum Umwandeln von thermischer Energie der so genannte Seebeck-Effekt beziehungsweise auch der Peltiereffekt genutzt werden. Bei mechanischer Energie kann beispielsweise auf Basis von Vibrationen beziehungsweise Bewegungen entsprechend Energie umgesetzt werden. Bei magnetischer Energie können entsprechende magnetische Wellen in elektrische Energie umgewandelt werden. Somit ist es ermöglicht, dass auf unterschiedliche Arten und Weisen die elektrische Energie in der passiven Energieumsetzeinrichtung umgesetzt werden kann.

Ein weiterer Aspekt der Erfindung betrifft eine Anordnung mit zumindest einem elektronischen Bauteil und einer Zählvorrichtung nach dem vorhergehenden Aspekt. Insbesondere wird somit das elektronische Bauteil mit der Zählvorrichtung bereitgestellt. Insbesondere kann die Anordnung dann beispielsweise auf einer Leiterplatine angeordnet werden.

Ferner betrifft die Erfindung auch ein Verfahren zum Zählen einer Benutzung eines elektronischen Bauteils mittels einer Zählvorrichtung nach dem vorhergehenden Aspekt. Es wird passiv eine Energie am elektronischen Bauteil mittel der Energieumsetzeinrichtung erfasst. Es wird die erfasste Energie in elektrische Energie mittels der Energieumsetzeinrichtung umgewandelt. Es erfolgt ein Detektieren des Ereignisses auf Basis der umgewandelten Energie mittels der Zählvorrichtung und ein Speichern des detektierten Ereignisses in der Speichereinrichtung.

Gemäß einer vorteilhaften Ausgestaltungsform des Verfahrens ist vorgesehen, dass eine mechanische Energie und/oder magnetische Energie und/oder eine thermische Energie in elektrische Energie mittels der Energieumsetzeinrichtung umgewandelt wird. Somit sind unterschiedliche Energieumsetzungen ermöglicht und das Verfahren ist in unterschiedlichen Anordnungen beziehungsweise elektronischen Bauteilen einsetzbar.

Ebenfalls vorteilhaft ist, wenn zusätzlich eine Dauer des detektierten Ereignisses mit abgespeichert wird. Somit kann neben dem Ereignis selbst auch die Dauer mit abgespeichert werden, wodurch zuverlässig beispielsweise auf einen Gesundheitszustand beziehungsweise Alterungszustand des elektronischen Bauteils zusätzlich geschlossen werden kann.

Vorteilhafte Ausgestaltungsformen der Zählvorrichtung sind als vorteilhafte Ausgestaltungsformen der Anordnung sowie des Verfahrens anzusehen. Die Zählvorrichtung sowie die Anordnung weisen hierzu gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

### Dabei zeigen:

- FIG 1: ein schematisches Blockschaltbild gemäß einer Ausführungsform einer Zählvorrichtung;
- FIG 2: ein schematisches Ablaufdiagramm gemäß einer Ausführungsform des Verfahrens;
- FIG 3: ein schematisches Zeit-Temperatur- beziehungsweise Zeit-Energiediagramm;
- FIG 4: ein weiteres schematisches Ablaufdiagramm gemäß einer Ausführungsform des Verfahrens;
- FIG 5: ein schematisches Blockschaltbild gemäß einer Ausführungsform einer Anordnung;
- FIG 6: ein weiteres schematisches Blockschaltbild gemäß einer Ausführungsform einer Anordnung; und
- FIG 7: ein nochmals weiteres schematisches Blockschaltbild gemäß einer Ausführungsform einer Anordnung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

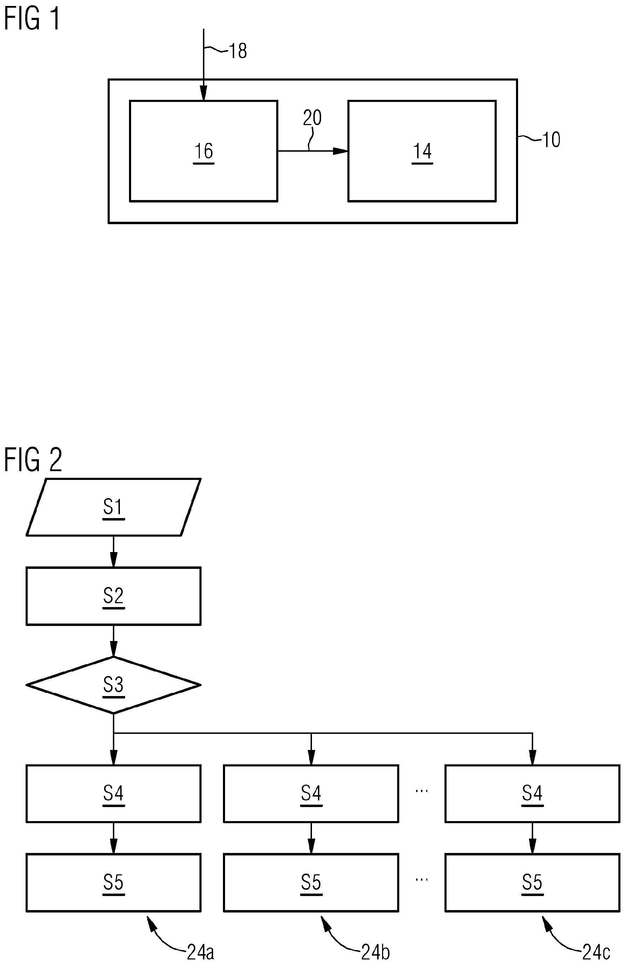

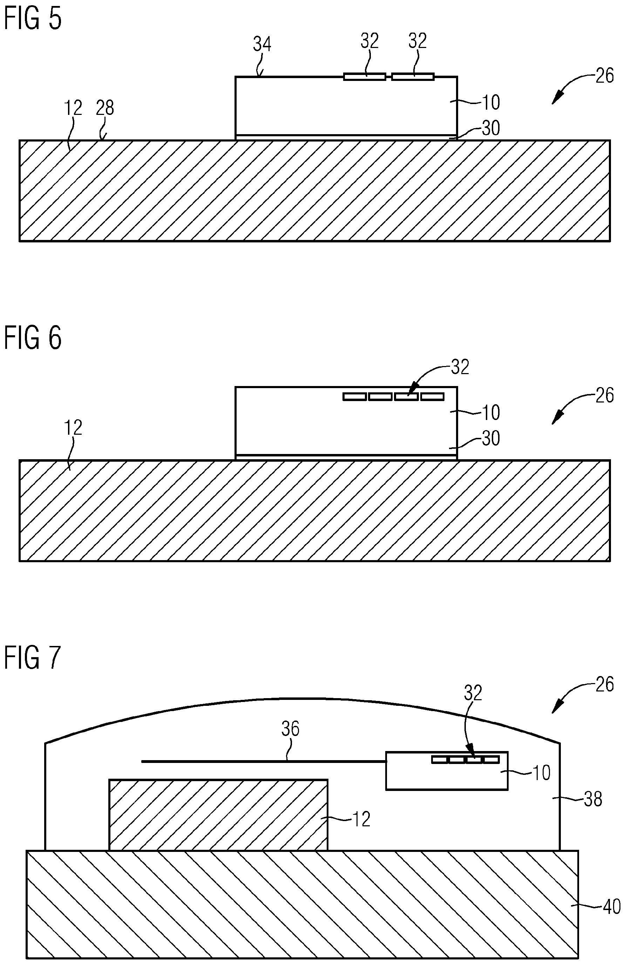

FIG 1 zeigt ein schematisches Blockschaltbild gemäß einer Ausführungsform einer Zählvorrichtung 10. Die Zählvorrichtung 10 ist zum Zählen einer Benutzung eines elektronischen Bauteils 12 (FIG 5) ausgebildet. Die Zählvorrichtung 10 weist zumindest eine Speichereinrichtung 14 auf. Beispielsweise kann die Speichereinrichtung 14 in Form eines Flash-Speichers ausgebildet sein. Insbesondere ist die Speichereinrichtung 14 als so genannter elektronischer Langzeitspeicher ausgebildet.

Es ist vorgesehen, dass eine passive Energieumsetzeinrichtung 16 vorgesehen ist, welche bei einer Benutzung des elektronischen Bauteils 12 Energie 18 am elektronischen Bauteil 12 in elektrische Energie 20 umsetzt, und auf Basis dieses Ereignisses 24 (FIG 2) eine Benutzung detektiert und in der Speichereinrichtung 14 abspeichert. Insbesondere kann dabei vorgesehen sein, dass beispielsweise die passive Energieumsetzeinrichtung 16 zum Umwandeln von thermischer Energie 18 und/oder mechanischer Energie 18 und/oder magnetischer Energie 18 in elektrische Energie 20 ausgebildet ist.

Insbesondere zeigt somit die FIG 1, dass die Energieumsetzeinrichtung 16 bereitgestellt ist, welche ohne eine äußere Energieversorgung Nutzungsdaten abspeichern kann. Dazu wird die Energieumsetzeinrichtung 16 bereitgestellt, welche aus Umweltenergie elektrische Energie 20 erzeugt. Dies kann auch als so genanntes Energy-Harvesting bezeichnet werden. Diese elektrische Energie 20 wird anschließend genutzt, um die Informationen, dass ein derartiges Ereignis aufgetreten ist, in einem speziellen elektronischen Langzeitspeicher, insbesondere der Speichereinrichtung 14, abgelegt. Ein wesentlicher Vorteil dabei ist, dass das Messereignis gleichzeitig der Energielieferant für das Abspeichern der Daten ist.

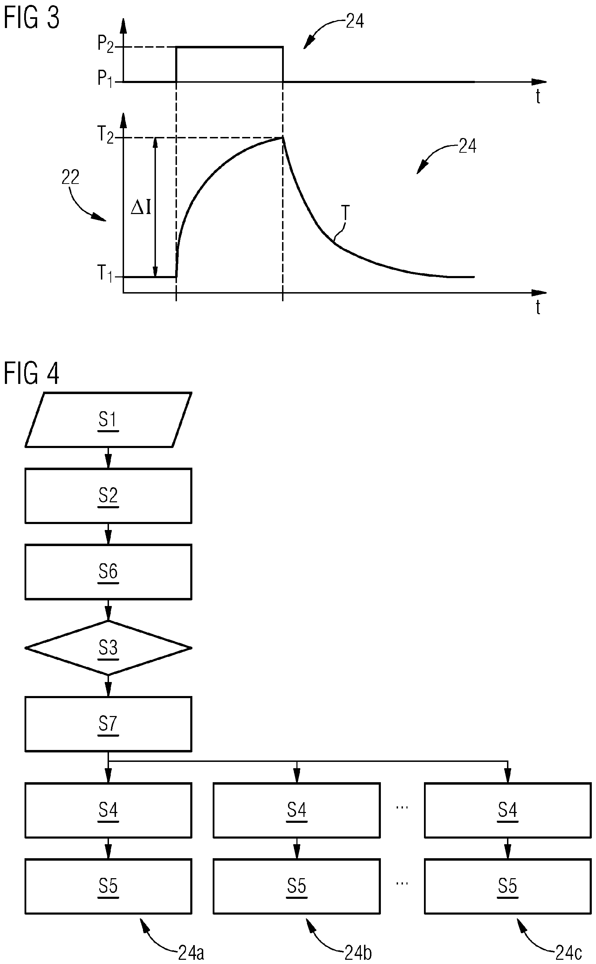

FIG 2 zeigt ein schematisches Ablaufdiagramm gemäß einer Ausführungsform des Verfahrens. In einem ersten Schritt S1 wird das Ereignis 24 erfasst. In einem zweiten Schritt S2 wird die Energie 18 in die elektrische Energie 20 umgesetzt. In einem dritten Schritt S3 erfolgt eine Prüfung, ob beispielsweise ein Schwellwert 22 (FIG 3) überschritten ist. Je nachdem, wie beispielsweise hoch der Schwellwert 22 gesetzt ist beziehungsweise welche Schwellwerte 22 überschritten wurden, ist vorgesehen, dass unterschiedliche Ereignisse detektiert werden können auf Basis unterschiedlicher Schwellwerte 22. Insbesondere sind drei unterschiedliche Ereignis 24a, 24b, 24c gezeigt. Jedem Ereignis 24a, 24b, 24c kann ein unterschiedlicher Schwellwert 22 zugeordnet werden. Sollte beispielsweise ein erster Schwellwert 22 überschritten werden, so kann ein erstes Ereignis 24a in einem vierten Schritt S4 in die Speichereinrichtung eingetragen werden. In einem fünften Schritt S5 kann dann wiederum der Zähler erhöht werden. Sollte beispielsweise ein zweiter Schwellwert 22 überschritten werden, welcher unterschiedlich zum ersten Schwellwert 22 ist, so kann ein zweites Ereignis 24b abgespeichert werden. Sollte beispielsweise ein dritter Schwellwert 22 überschritten sein, welcher unterschiedlich zum ersten Schwellwert 22 und zum zweiten Schwellwert 22 ist, so kann ein drittes Ereignis 24c detektiert und abgespeichert werden.

Insbesondere kann beispielsweise das sensorische beziehungsweise energieerzeugende Element, insbesondere die Energieumsetzeinrichtung 16, dazu innerhalb des gleichen Gehäuses wie die Speichereinrichtung 14 selbst ausgebildet sein oder als separates Bauteil vorliegen. Ein Ablaufdiagramm für den Speichervorgang ist in der FIG 2 dargestellt, insbesondere am Beispiel eines Temperatur-Ereignisses. Zusätzlich zu den Temperatur-Ereignissen sind auch elektromagnetische Felder beziehungsweise Wellen oder mechanische Schock- und Vibrationsereignisse für eine Energieerzeugung und einen abschließenden Speichervorgang geeignet.

FIG 3 zeigt wiederum ein entsprechendes Diagramm für ein Temperaturereignis. Die untere Kurve beschreibt den Aufheiz- und Abkühlvorgang des elektronischen Bauteils 12. Das elektronische Bauteil 12 kann beispielsweise in Form eines Leistungshalbleiters bereitgestellt werden. Das elektronische Bauteil 12 wird mit einer elektrischen Leistung bestromt und die Temperatur T steigt auf einen leistungs- und zeitabhängigen Wert an. Dann wird die Leistung abgeschaltet und der Halbleiter kühlt wieder auf Umgebungstemperatur ab. Das für diese Erfindung zugrunde gelegte Ereignis 24 und die zugrunde gelegte Temperatur T entspricht dem ΔT in dieser Darstellung. ΔT ist im Bereich von mechanischen Schädigungsvorgängen die entscheidende Messgröße und ein Tracking, beziehungsweise ein Zählen der Anzahl an Temperaturwechselvorgängen, ist ein wichtiges Merkmal zur Qualitäts- und Lebensdauerbeurteilung. Damit ein sauberes Tracking stattfinden kann, müssen die ΔT einen gewissen Mindestwert, insbesondere einen Schwellwert 22, überschreiten. Außerdem wird durch eine präzise Einstellung der geometrischen Abstände zwischen Sensor und/oder zum Beispiel durch eine Kalibrierung gewährleistet, dass die aufgezeichneten Temperaturhübe und Schädigungsereignisse, wie sie aufgezeichnet werden sollen, auch einem Ereignis 24 entsprechen. Im oberen Teil der FIG 3 ist insbesondere dann wiederum die Energieerzeugung über die Energieumsetzeinrichtung 16 gezeigt.

FIG 4 zeigt ein weiteres schematisches Ablaufdiagramm gemäß einer Ausführungsform des Verfahrens. Hierbei kann zusätzlich vorgesehen sein, dass nach dem zweiten Schritt S2 ein sechster Schritt S6 durchgeführt wird, welcher eine Dauer des Ereignisses 24 misst. Nach dem sechsten Schritt S6 erfolgt wiederum der dritte Schritt S3, welcher die Überprüfung des Schwellwerts 22 vorsieht. Es erfolgt dann nach dem dritten Schritt S3 ein siebter Schritt S7, welcher in der Speichereinrichtung 14 auch die Dauer des Ereignisses 24 abspeichert. Insbesondere ist somit in der FIG 4 eine Erweiterung der Vorgehensweise gemäß FIG 2 dargestellt. Dort wird zusätzlich zur Ereignishöhe noch die Ereignisdauer gemessen und diese zusätzlich mitabgespeichert.

Zum Abspeichern der Informationen im Langzeitspeicher können zum Beispiel die aus der Flash-Speicher-Technologie bekannten Transistoren mit Floating Gate-Strukturen verwendet werden. In diesen Transistoren können mit Hilfe von quantenmechanischen Tunneleffekten Elektronen auf so genannten Floating Gate-Strukturen übertragen werden. Diese Strukturen befinden sich an einer isolierenden Materie, zum Beispiel Siliziumoxid, und speichern die Ladungsträger dauerhaft ab. Durch diese Ladungsträger wird der Zustand des Transistors dauerhaft beeinflusst und kann zu einem späteren Zeitpunkt ausgelesen werden. Möglich ist auch, in Abhängigkeit des äußeren Störpulses, unterschiedlich große Ladungsmengen auf das Floating-Gate zu übertragen. Dadurch kann die Pulsstärke analog codiert auf dem Transistor gespeichert werden und so zusätzlich Halbleiterfläche und -komplexität reduziert werden.

FIG 5 zeigt ein schematisches Blockschaltbild gemäß einer Ausführungsform einer Anordnung 26. Die Anordnung 26 weist zumindest das elektronische Bauteil 12 sowie die Zählvorrichtung 10 auf. Insbesondere ist vorliegend gezeigt, dass die Zählvorrichtung 10 auf einer Oberfläche 28 des elektronischen Bauteils 12 beispielsweise angeklebt beziehungsweise gelötet ist. Hierzu kann beispielsweise eine Klebeschicht 30 vorgesehen sein.

Ferner zeigt die FIG 5, dass wiederum die Zählvorrichtung 10 eine Ausleseeinrichtung 32 zum Auslesen von zumindest dem Zählerstand in der Speichereinrichtung 14 aufweisen kann. Im vorliegenden Ausführungsbeispiel ist die Ausleseeinrichtung 32 insbesondere in Form von zumindest einem Prüfpad, insbesondere in Form von zwei Prüfpads, ausgebildet.

Insbesondere zeigt somit die FIG 5 eine beispielhafte Anordnung 26. Insbesondere ist die Zählvorrichtung 10 in Form eines Chips ausgebildet. Der Chip wird mit Hilfe eines Klebers oder eines Lotes auf die zu überwachende Schaltung oder das zu überwachende elektronische Bauteil 12 aufgebracht beziehungsweise eingebettet. Unter Einbetten versteht man zum Beispiel das Einbringen des Chips zwischen die Sheets von Leiterplatten, aber auch zum Beispiel Spritzgussteile oder Silikon-Gelees. Beispielsweise befinden sich auf einer Oberseite 34 der Zählvorrichtung 10 elektrisch kontaktierbare Pads, mit deren Hilfe der Zustand der Speichereinrichtung 14 zu einem beliebigen späteren Zeitpunkt ausgelesen werden kann.

FIG 6 zeigt ein weiteres schematisches Blockschaltbild gemäß einer Ausführungsform einer Anordnung 26. Im vorliegenden Ausführungsbeispiel kann insbesondere vorgesehen sein, dass die Ausleseeinrichtung 32 in Form einer Antenneneinrichtung, beispielsweise in Form eines RFID-Chips bereitgestellt ist. Damit kann der Auslesevorgang auch über ein in das Gehäuse eingebrachte Antennenstruktur durchgeführt werden. Der Chip ist dann von außen nicht elektrisch zugänglich, das heißt mechanisch, chemisch und im Hinblick auf Security besser geschützt. Außerdem ist das Package einfacher und daher kostengünstiger herzustellen.

FIG 7 zeigt ein nochmals weiteres schematisches Blockschaltbild gemäß einer Ausführungsform der Anordnung 26. Im vorliegenden Ausführungsbeispiel ist das elektronische Bauteil 12 auf einer Platine 34 ausgebildet. Die Zählvorrichtung 10 weist einen Temperaturfühler 36 auf. Mittels des Temperaturfühlers 36 kann thermische Energie 18 erfasst werden.

Ferner zeigt die FIG 7, dass die Zählvorrichtung 10, das elektronische Bauteil 12 und der Temperaturfühler 36 in einer organischen Matrix 38 angeordnet sind. Insbesondere zeigt somit die FIG 7 eine weitere Ausführungsform der Zählvorrichtung 10 auf Basis von organischen und teilweise flexiblen Materialien. Diese organischen Materialien können auch Teilbereiche mit festen Strukturen vorweisen. Diese festen Strukturen können in diesem Fall beispielsweise Halbleiterbausteine oder Leiterbahnen aufweisen. Es ist auch möglich, die Schaltung insgesamt oder Teilbereiche davon als gedruckte Elektronik auszuführen. Dieses flexible Label hat den Vorteil, dass es auch auf zum Beispiel Kabel, BUS-Barrs, Gehäuse oder passive Schaltungselemente wie Kondensatoren und Drosseln, aufgebracht werden kann.

### Bezugszeichenliste

- 10: Zählvorrichtung
- 12: elektronisches Bauteil
- 14: Speichereinrichtung
- 16: passive Energieumsetzeinrichtung
- 18: Energie
- 20: elektrische Energie
- 22: Schwellwert
- 24: Ereignis
- 26: Anordnung
- 28: Oberfläche
- 30: Klebeschicht
- 32: Ausleseeinrichtung
- 34: Oberseite
- 36: Temperaturfühler
- 38: organische Matrix
- 40: Platine
- t: Zeit
- T: Temperatur
- P: Energie
- S1 bis S7: Schritte des Verfahrens

## Patentansprüche

1. Zählvorrichtung (10) zum Zählen einer Benutzung eines elektronischen Bauteils (12), mit zumindest einer Speichereinrichtung (14),
**dadurch gekennzeichnet, dass**
eine passive Energieumsetzeinrichtung (16) vorgesehen ist, welche bei einer Benutzung des elektronischen Bauteils (12) Energie (18) am elektronischen Bauteil (12) in elektrische Energie (20) umsetzt, und auf Basis dieses Ereignisses (24) eine Benutzung detektiert und in der Speichereinrichtung (14) abspeichert.

2. Zählvorrichtung (10) nach Anspruch 1, **dadurch gekennzeichnet, dass**
die Zählvorrichtung (10) zum Ankleben oder zum Anlöten an eine Oberfläche (28) des elektronischen Bauteils (12) ausgebildet ist.

3. Zählvorrichtung (10) nach Anspruch 1 oder 2, **dadurch gekennzeichnet, dass**
die Zählvorrichtung (10) eine Ausleseeinrichtung (32) zum Auslesen von zumindest einem Zählerstand in der Speichereinrichtung (14) aufweist.

4. Zählvorrichtung (10) nach Anspruch 3, **dadurch gekennzeichnet, dass**
die Ausleseeinrichtung (32) in Form von zumindest einem Prüfpad ausgebildet ist.

5. Zählvorrichtung (10) nach Anspruch 3, **dadurch gekennzeichnet, dass**
die Ausleseeinrichtung (32) in Form von einer Antenneneinrichtung, insbesondere als RFID-Chip, ausgebildet ist.

6. Zählvorrichtung (10) nach einem der vorhergehenden Ansprüche, **dadurch gekennzeichnet, dass**
die Zählvorrichtung (10) einen Temperaturfühler (36) aufweist, wobei mittels des Temperaturfühlers (36) thermische Energie (18) erfasst wird.

7. Zählvorrichtung (10) nach Anspruch 6, **dadurch gekennzeichnet, dass**
die Zählvorrichtung (10), das elektronische Bauteil (12) und der Temperaturfühler (36) in einer organischen Matrix (40) angeordnet sind.

8. Zählvorrichtung (10) nach einem der vorhergehenden Ansprüche, **dadurch gekennzeichnet, dass**
die Zählvorrichtung (10) dazu ausgebildet ist, bei einem Überschreiten einer vorgegebenen Schwellwerts (22) für die Energie (18) am elektronischen Bauteil (12) ein Ereignis (24) zu detektieren.

9. Zählvorrichtung (10) nach einem der vorhergehenden Ansprüche, **dadurch gekennzeichnet, dass**
die Zählvorrichtung (10) zusätzlich dazu ausgebildet ist, eine Dauer des Ereignisses (24) zu detektieren und abzuspeichern.

10. Zählvorrichtung (10) nach einem der vorhergehenden Ansprüche, **dadurch gekennzeichnet, dass**
die Speichereinrichtung (14) als Flash-Speicher ausgebildet ist.

11. Zählvorrichtung (10) nach einem der vorhergehenden Ansprüche, **dadurch gekennzeichnet, dass**
die passive Energieumsetzeinrichtung (16) zum Umwandeln von thermischer Energie (18) und/oder mechanischer Energie (18) und/oder magnetischer Energie (18) in elektrische Energie (20) ausgebildet ist.

12. Anordnung (26) mit zumindest einem elektronischen Bauteil (12) und einer Zählvorrichtung (10) nach einem der Ansprüche 1 bis 11.

13. Verfahren zum Zählen einer Benutzung eines elektronischen Bauteils (12) mittels einer Zählvorrichtung (10) nach einem der Ansprüche 1 bis 11, mit den Schritten:
- Passives Erfassen einer Energie (18) am elektronischen Bauteil (12) mittels der Energieumsetzeinrichtung (16);
- Umwandeln von der erfassten Energie (18) in elektrische Energie (20) mittels der Energieumsetzeinrichtung (16);
- Detektieren des Ereignisses (24) auf Basis der umgewandelten elektrischen Energie (20) mittels der Zählvorrichtung (10); und
- Speichern des detektierten Ereignisses (24) in der Speichereinrichtung (14).

14. Verfahren nach Anspruch 13, **dadurch gekennzeichnet, dass** eine mechanische Energie (18) und/oder eine magnetische Energie (18) und/oder eine thermische Energie (18) in elektrische Energie (20) mittels der Energieumsetzeinrichtung (16) umgewandelt wird.

15. Verfahren nach Anspruch 13 oder 14, **dadurch gekennzeichnet, dass**
zusätzlich eine Dauer des detektierten Ereignisses (24) mit abgespeichert wird.
